# DEMANDE DE BREVET EUROPEEN

(11) **EP 2 174 813 A1**
(43) Date de publication de la demande: **14.04.2010**
(21) Numéro de dépôt: 09171129.1
(22) Date de dépôt: 23.09.2009
(51) Int. Cl.: B60J 5/06, B60N 2/46, E05F 15/00, E05F 5/00, E05F 7/00

(54) **Porte latérale coulissante de véhicule comprenant un accoudoir escamotable**

(30) Priorité: 07.10.2008 FR 0856804
(71) Demandeur: PEUGEOT CITROËN AUTOMOBILES SA, 78140 Velizy-Villacoublay (FR)
(72) Inventeur: Tine, Laurent, 78110, LE VESINET (FR)

(57) **Abrégé**

L'invention concerne un ensemble comprenant une porte (10) latérale coulissante de véhicule, un encadrement (20) de la porte, un dispositif de centrage (30) de la porte par rapport à l'encadrement lors de la fermeture de la porte, comprenant un centreur (31) destiné à coopérer avec un guide (32), un accoudoir (1) de la porte rendu mobile entre une position escamotée et une position déployée et un actionneur provoquant le déploiement de l'accoudoir (1) de sa position escamotée vers sa position déployée.

L'ensemble de l'invention se **caractérise en ce que** le dispositif de centrage (30) est ledit actionneur.

L'invention concerne également une porte latérale coulissante et un véhicule pourvu d'un tel ensemble.

## Description

La présente invention concerne le domaine des portes latérales coulissantes de véhicule comprenant un accoudoir escamotable.

Selon un premier art antérieur, par exemple décrit dans la demande de brevet FR2876065, il est connu une porte latérale coulissante de véhicule comprenant un accoudoir escamotable. L'accoudoir escamotable peut être rétracté lors de l'ouverture de la porte latérale coulissante. La porte latérale coulissante comporte des moyens de déploiement de l'accoudoir actionnés automatiquement par un élément spécifique dédié, lors de la fermeture de la porte latérale coulissante.

Selon l'invention, il a été constaté que ces moyens de déploiement automatique présentent l'inconvénient de prendre une place importante au niveau de la porte latérale et de son encadrement et de complexifier leur structure.

Selon un deuxième art antérieur, par exemple décrit dans la demande de brevet FR2861417, il est connu un dispositif de centrage, par rapport à son encadrement, de la porte latérale lors de sa fermeture.

L'invention vise à diminuer le volume total nécessaire à la réalisation des fonctions de centrage et de déploiement par un agencement optimisé des dispositifs correspondant à ces fonctions. L'invention se propose même d'utiliser le dispositif de centrage comme actionneur du déploiement de l'accoudoir, ce qui minimise le volume supplémentaire nécessité par la fonction de déploiement de l'accoudoir.

La présente invention a trait à un ensemble comprenant une porte latérale coulissante de véhicule, un encadrement de la porte, un dispositif de centrage de la porte par rapport à l'encadrement lors de la fermeture de la porte, comprenant un centreur destiné à coopérer avec un guide, un accoudoir de la porte, mobile entre une position escamotée et une position déployée, un actionneur provoquant le déploiement de l'accoudoir de sa position escamotée vers sa position déployée, **caractérisé en ce que** le dispositif de centrage est ledit actionneur.

Le dispositif de centrage actionnant lui-même le déploiement de l'accoudoir, un élément supplémentaire dédié au déclenchement de la fonction de déploiement de l'accoudoir n'est plus nécessaire.

L'objet de l'invention est aussi une porte latérale coulissante de véhicule comprenant un accoudoir de la porte, mobile entre une position escamotée et une position déployée, un moyen de déploiement de l'accoudoir, **caractérisée en ce que** ledit moyen de déploiement est apte à coopérer avec un élément de centrage de la porte par rapport à son encadrement, lors de la fermeture de la porte.

L'objet de l'invention concerne également un véhicule intégrant un ensemble selon l'invention ou une porte latérale coulissante selon l'invention.

De préférence, le dispositif de centrage, lors de la fermeture de la porte, entraîne mécaniquement le déplacement de l'accoudoir de sa position escamotée vers sa position déployée. Une chaîne d'entraînement entièrement mécanique présente l'avantage de la simplicité et de la robustesse, ne nécessitant notamment pas de source d'énergie supplémentaire pour la transmission entre le dispositif de centrage et l'accoudoir.

De préférence, le dispositif de centrage comprend un centreur et un guide comprenant lui-même une pièce mobile sous l'action du centreur. Ainsi, la longueur du centreur peut être réduite, ce qui évite aux occupants du véhicule d'accrocher leurs vêtements au centreur lors de leur descente du véhicule.

De préférence, ladite pièce mobile est un doigt mobile situé dans l'axe du centreur. Ainsi le centreur peut être de type standard, tandis que la longueur du doigt mobile est adaptée aux dimensions de la porte latérale coulissante du véhicule.

De préférence, le doigt mobile est entouré par un ressort de rappel du doigt mobile vers le centreur. Le ressort de rappel assiste le mouvement du doigt mobile lors de l'escamotage de l'accoudoir.

De préférence, le doigt mobile est guidé en translation à l'intérieur du guide. Ainsi, la cinématique de transmission du mouvement entre le dispositif de centrage et le moyen de déploiement de l'accoudoir est simplifiée.

De préférence, le mouvement de la pièce mobile dans le guide vers le centreur est limité par une butée. Ainsi, la course de déplacement de la pièce mobile est limitée empêchant ainsi cette dernière de tomber hors du guide.

De préférence, le déplacement de l'accoudoir est provoqué par la mise en rotation d'un palonnier. Le palonnier participe ainsi à la transformation du mouvement relatif de translation du centreur par rapport à la porte, en un mouvement de rotation de l'accoudoir par rapport à la porte.

De préférence, le doigt mobile est en contact permanent avec le palonnier. Ainsi les jeux dans la chaîne de transmission du mouvement sont réduits voire supprimés.

De préférence, l'ensemble comprend une tringlerie intermédiaire entre le palonnier et l'accoudoir, ce qui permet de s'affranchir d'une contrainte de proximité entre le dispositif de centrage et l'accoudoir.

De préférence, le dispositif de centrage est situé dans la zone sèche de l'ensemble, de sorte que son installation ne pose pas de problèmes d'adaptation de l'étanchéité de la zone humide de la porte latérale.

De préférence, le dispositif de centrage comprend un centreur monté sur l'encadrement et un guide coopérant avec le centreur et monté sur la porte. Ainsi le centreur est fixement monté sur la structure le portant ce qui augmente la précision de son position améliorant ainsi la qualité du centrage de la porte sur son encadrement.

Dans un premier mode de réalisation optionnel, le guide est monté sur un garnissage intérieur de la porte.

Dans un second mode de réalisation optionnel, le guide est monté entre un garnissage intérieur de la porte et une doublure de la porte.

D'autres avantages et particularités de l'invention ressortent de la description des modes de réalisation faite ci-après en référence aux dessins annexés dans lesquels :
- la figure 1 représente schématiquement une vue partielle en perspective d'un exemple d'une porte latérale coulissante de véhicule automobile et de son encadrement de porte, selon l'invention ;
- la figure 2 représente schématiquement une vue en perspective d'un détail d'un exemple d'une porte latérale coulissante de véhicule automobile et de son encadrement de porte selon l'invention ;
- la figure 3 représente schématiquement une autre vue en perspective d'un détail d'un exemple d'une porte latérale coulissante de véhicule automobile et de son encadrement de porte selon l'invention ;
- la figure 4 représente schématiquement une vue supplémentaire en perspective d'un détail d'un exemple d'une porte latérale coulissante de véhicule automobile et de son encadrement de porte selon l'invention.

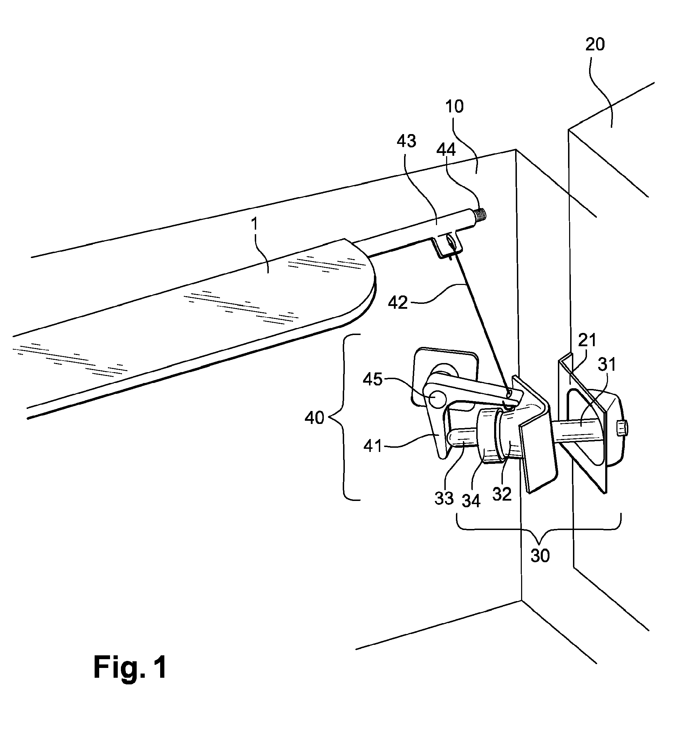

En se reportant à la figure 1, un accoudoir 1 escamotable est représenté en position déployée en saillie hors d'une porte 10 latérale coulissante qui est en position de fermeture d'une ouverture délimitée par un encadrement 20.

Un dispositif de centrage 30 de la porte 10 sur son encadrement 20 comprend d'une part un centreur 31 monté fixement sur une pièce de support 21, elle-même montée fixement sur l'encadrement 20, et d'autre part un guide 32 monté fixement sur la porte 10. Le guide 32 comprend un trou traversant au travers duquel le centreur 31 est apte à s'étendre en tout ou partie à l'intérieur. Le centreur 31 est sensiblement de forme complémentaire à celle du trou ménagé dans le guide 32. Le trou du guide 32 comprend à une de ces extrémités, une ouverture d'entrée du centreur 31, et à l'autre de ses extrémités, une ouverture de sortie.

Le guide 32 est lié à un doigt mobile 33 au moyen d'un bouchon 34 disposé à l'extrémité du guide 32. Ledit doigt mobile 33 s'étend au travers de l'ouverture de sortie du guide 32.

La porte 10 comprend un dispositif de déploiement de l'accoudoir 1 qui prend le repère général 40 et comprend un palonnier 41 lié à un axe de rotation 43 de l'accoudoir 1 par l'intermédiaire d'une tringlerie 42.

L'une des extrémités de l'axe 43 de rotation qui est rattachée à la structure de porte 10 comprend un ressort 44, par exemple de type torique, permettant un rappel de l'accoudoir 1 vers une position escamotée non représentée.

L'extrémité du doigt mobile 33, sortant du guide 32, est en appui sur le palonnier 41 lié à la structure de la porte par un axe 45 de rotation. Le palonnier 41 est ainsi apte à pivoter entre deux positions extrêmes, l'une correspondant à une position déployée de l'accoudoir 1, l'autre (non représentée) correspondant à une position escamotée de l'accoudoir 1.

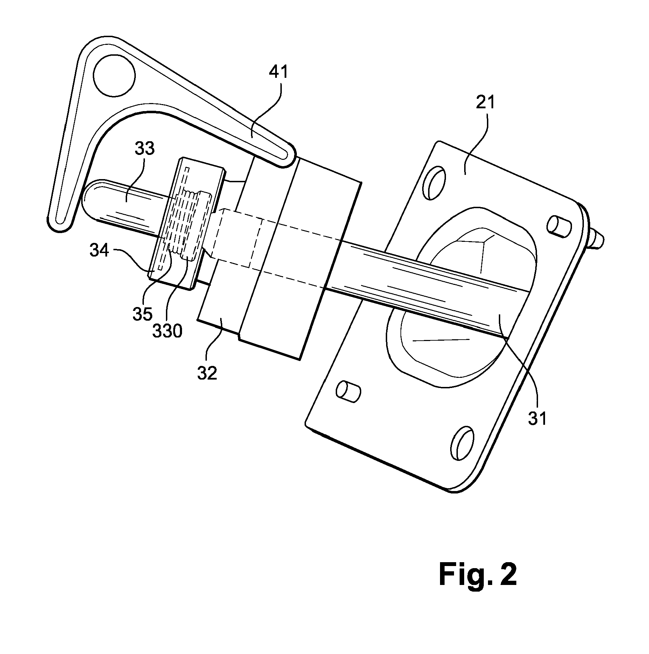

Dans la figure 2, qui est un agrandissement du dispositif de centrage de la figure 1, le centreur 31 est introduit à l'intérieur du guide 32 de sorte que l'extrémité libre du centreur 31 est en appui sur la tête 330 du doigt mobile 33, à l'intérieur du guide 32. De préférence le doigt 33 est destiné à s'étendre linéairement au prolongement du centreur 31.

Le bouchon 34 est vissé sur le guide 32 au niveau d'une extrémité opposé à celle d'entrée du centreur 31.

Pour ce faire, le guide 32 comprend une extrémité filetée permettant le vissage du bouchon 34.

La tête 330 du doigt 33 est disposée à l'intérieur du guide 32 et s'étend de façon sensiblement perpendiculaire à la tige cylindrique du doigt mobile 33. L'ensemble constitué du guide 32 et du bouchon 34 forme un moyen de guidage par coulissement dudit doigt 33 entre des positions extrêmes rétractée et escamotée définies d'un côté par le guide 32, de l'autre par le bouchon 34.

La tête 330 et le bouchon 34 constituent des butées contre lesquelles prend appui un ressort 35 entourant le doigt mobile 33. Ainsi agencé entre le doigt 33 et le bouchon 34, le ressort 35 permet de rappeler le doigt 33 vers sa position extrême rétractée à l'intérieur du guide.

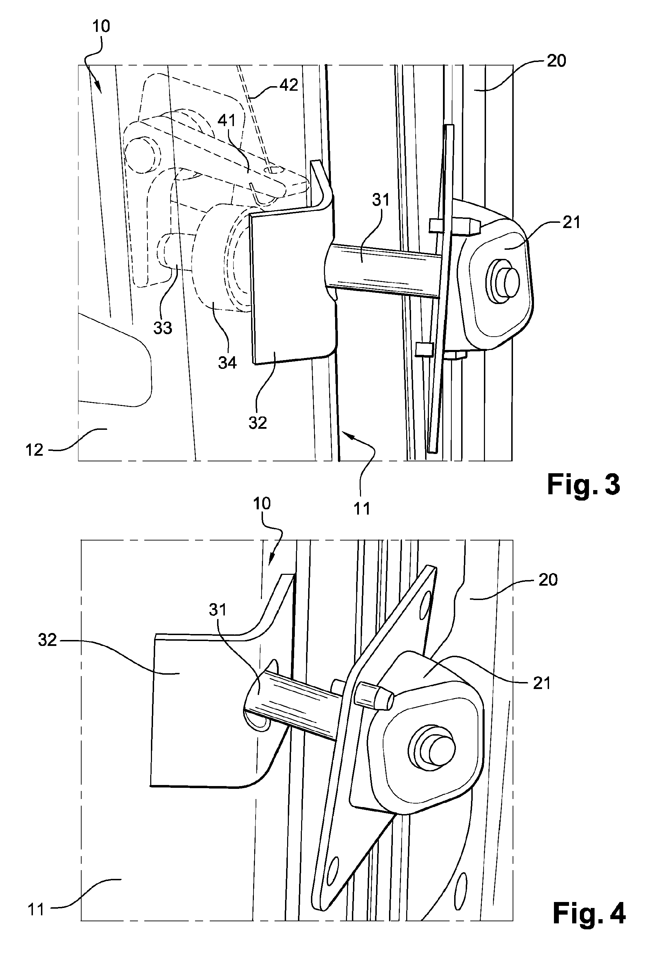

Sur la figure 3, la porte 10 comprend une garniture 11 de porte qui s'étend globalement au droit de l'habitacle du véhicule et dans l'ouverture de porte. La garniture 11 est représentée en transparence de sorte qu'il est rendu visible derrière celle-ci une partie du dispositif de centrage 30 et du moyen de déploiement 40 de l'accoudoir 1.

Dans ce mode de réalisation, le guide 32 est monté sur la garniture 11 qui est une pièce suffisamment rigide pour supporter l'effort de centrage appliqué par le centreur 31 à la porte 10 à l'intérieur de laquelle la garniture 11 est montée.

Le guide 32 est dans un mode de réalisation rapporté sur la garniture 11 de sorte qu'une partie de ce dernier recouvre la garniture. Le guide 32 est alors monté fixé à la garniture 11 par l'intermédiaire d'un sertissage.

Le guide 32 est dans un autre mode de réalisation obtenu par un surmoulage de la garniture 11 de sorte qu'ils forment une unique pièce réalisée d'un seul tenant.

Sur la figure 4, le guide 32 est monté sur la garniture 11 de la porte 10. La garniture 11 recouvre partiellement le dispositif de centrage 30 et le moyen de déploiement 40 de sorte que la partie concernée de la garniture 11 est protégée par le guide 32 lors de la fermeture de la porte 10, du moins lorsque le centreur 31 approche du guide 32.

Selon un autre mode de réalisation (non représenté) de l'ensemble comprenant les dispositifs de centrage 30 et de déploiement 40 de l'accoudoir, le guide 32 est monté solidaire à la doublure intérieure 12 de porte 10 de sorte que la garniture 11 comprend une ouverture de passage du centreur 31 située de façon coaxiale au trou du guide 32.

Dans une variante de ce dernier mode de réalisation, le guide 32 est lié à la doublure intérieure 12 de porte au moyen d'une plaque de renfort (non représentée) dédiée, disposée en conséquence entre la garniture 11 et la doublure intérieure 12 de porte, et soudée sur cette dernière.

Indépendamment de l'un des modes de réalisation, l'ensemble selon l'invention est situé dans une zone sèche de la porte et de son encadrement, une telle zone sèche étant pour la porte 10 délimité par la présence d'une doublure 12 de porte pourvu d'un film étanche non représenté, et par des joints d'étanchéité (non représentés) disposés en périphérie de la porte 10 et de l'encadrement 20 de celle-ci.

Dans ce qui suit une description du fonctionnement des pièces susmentionnées va être détaillée afin de mettre en évidence la concomitance entre le déploiement de l'accoudoir 1 et le centrage de la porte 10 sur son encadrement 20, lors de la fermeture de celle-ci.

En partant d'une position d'ouverture de la porte 10, l'accoudoir 1 est dans une position escamotée d'orientation sensiblement parallèle à celle du panneau formant la garniture 11 de porte. L'accoudoir 1 est maintenu ainsi dans la position escamotée au moyen d'un ressort 44 nommé ressort de rappel. Celui-ci est calibré afin d'exercer un effort suffisant pour plaquer l'accoudoir 1 verticalement contre la garniture 11 et pour positionner le palonnier 41 dans une position extrême, non représentée, au moyen de la tringlerie 42.

Lorsque la porte 10 est par la suite déplacée de sa position d'ouverture vers sa position de fermeture, le dispositif de centrage 30 assure la bonne position relative de la porte par rapport à son encadrement. Le centrage s'effectue selon une disposition progressive du centreur 31 à l'intérieur du guide 32. Avant même que le centreur 31 ait terminé sa course à l'intérieur du guide 32, l'extrémité libre du centreur vient en appui contre le doigt mobile 33 qui est alors disposé dans une position extrême rétractée à l'intérieur du guide 32. La porte 10 se trouve dès lors dans une position de quasi fermeture.

En continuant sa course à l'intérieur du guide 32, le centreur 31 déplace le doigt mobile 33 hors du guide 32, vers sa position extrême déployée, comprimant de la sorte le ressort 35, tandis qu'en simultané, la porte 10 est déplacée de la position de quasi fermeture à sa position de fermeture totale.

En passant ainsi d'une position extrême rétractée à une position extrême déployée, le doigt 33 alors en appui contre le palonnier 41 engendre le pivotement de ce dernier entre ses positions extrêmes de rotation autour de l'axe 45.

La tringlerie 42, réalisée par un câble en acier à titre d'exemple, qui relie l'axe de rotation de l'accoudoir 1 au palonnier 41, exerce un effort de traction sur la came de l'axe de rotation de l'accoudoir 1 et provoque le déploiement de l'accoudoir 1 vers une position d'utilisation, dans laquelle ce dernier s'étend en saillie hors de la garniture 11 de porte 10, de manière sensiblement perpendiculaire à celle-ci.

C'est ainsi que le déplacement de l'accoudoir 1 est obtenu par une chaîne mécanique intégrant le dispositif de déploiement 40 et le dispositif de centrage 30 de la porte 10, lors de sa fermeture, de sorte que le déploiement de l'accoudoir s'effectue en concomitance du centrage de la porte sur son encadrement.

Bien entendu, en procédant au déplacement de la porte de sa position de fermeture vers sa position d'ouverture, lesdits dispositifs susmentionnés effectuent les mêmes actions mais dans un sens inverse qui se traduit globalement par un retrait du centreur 31 de l'intérieur du guide 32. Le ressort 35 alors dans un état comprimé exerce sur le doigt mobile un effort de poussée de celui-ci vers sa position extrême rétractée à l'intérieur du guide 32. Le ressort de rappel 44 engendre le déplacement de l'axe de rotation 43 de l'accoudoir ce qui provoque, par l'intermédiaire de la tringlerie 42, le déplacement du palonnier 41 vers l'autre position extrême. Par cet ensemble de ressorts 44 et 35 de rappel, ledit doigt mobile 33 est en appui permanent avec le palonnier 41.

## Revendications

1. Ensemble comprenant une porte (10) latérale coulissante de véhicule, un encadrement (20) de la porte, un dispositif de centrage (30) de la porte par rapport à l'encadrement lors de la fermeture de la porte, comprenant un centreur (31) destiné à coopérer avec un guide (32), un accoudoir (1) de la porte rendu mobile entre une position escamotée et une position déployée et un actionneur provoquant le déploiement de l'accoudoir (1) de sa position escamotée vers sa position déployée, **caractérisé en ce que** le dispositif de centrage (30) est ledit actionneur.

2. Ensemble selon la revendication 1, **caractérisé en ce que** le dispositif de centrage (30), lors de la fermeture de la porte, entraîne mécaniquement le déplacement de l'accoudoir (1) de sa position escamotée vers sa position déployée.

3. Ensemble selon la revendication 2, **caractérisé en ce que** le dispositif de centrage (30) comprend un centreur (31) et un guide (32) comprenant lui-même un doigt mobile (33) sous l'action du centreur.

4. Ensemble selon la revendication 3, **caractérisé en ce que** ledit doigt mobile (33) est situé dans l'axe du centreur (31).

5. Ensemble selon la revendication 4, **caractérisé en ce que** le doigt mobile (33) est entouré par un ressort (35) de rappel du doigt mobile vers le centreur.

6. Ensemble selon l'une quelconque des revendications 4 à 5, **caractérisé en ce que** le doigt mobile (33) est guidé en translation à l'intérieur du guide (32).

7. Ensemble selon l'une quelconque des revendications 3 à 6, **caractérisé en ce que** le mouvement dans le guide (32) dudit doigt mobile (33) vers le centreur (31) est limité par une butée formé par le centreur lui-même.

8. Ensemble selon l'une quelconque des revendications précédentes, **caractérisé en ce que** le déplacement de l'accoudoir (1) est provoqué par la mise en rotation d'un palonnier (41).

9. Ensemble selon la revendication 8 rattachée à l'une quelconque des revendications 4 à 7, **caractérisé en ce que** le doigt mobile (33) est en contact permanent avec le palonnier (41).

10. Ensemble selon la revendication 8 ou 9, **caractérisé en ce que** l'ensemble comprend une tringlerie (42) intermédiaire agencée entre le palonnier (41) et l'accoudoir (1).

11. Ensemble selon l'une quelconque des revendications précédentes, **caractérisé en ce que** le dispositif de centrage (30) est situé dans la zone sèche de l'ensemble.

12. Ensemble selon l'une quelconque des revendications précédentes, **caractérisé en ce que** le dispositif de centrage (30) comprend un centreur (31) monté sur l'encadrement (20) et un guide (32) coopérant avec le centreur et monté sur la porte (10).

13. Ensemble selon la revendication 12, **caractérisé en ce que** le guide (32) est monté sur un garnissage intérieur (11) de la porte (10).

14. Ensemble selon la revendication 12, **caractérisé en ce que** le guide (32) est monté entre un garnissage intérieur (11) de la porte (10) et une doublure (12) de la porte.

15. Porte latérale coulissante (10) de véhicule comprenant un accoudoir (1) de la porte qui est rendu mobile entre une position escamotée et une position déployée par un moyen dédié de déploiement (40) de l'accoudoir, **caractérisée en ce que** ledit moyen de déploiement (40) est apte à coopérer avec au moins un élément de centrage (31, 32, 33) de la porte par rapport à son encadrement, lors de la fermeture de la porte.

16. Véhicule **caractérisé en ce qu'**il comprend un ensemble selon l'une quelconque des revendications 1 à 14.
